# EUROPÄISCHE PATENTSCHRIFT

(11) **EP 1 813 787 B1**
(45) Veröffentlichungstag und Bekanntmachung des Hinweises auf die Patenterteilung: **03.04.2019**
(21) Anmeldenummer: 06127029.4
(22) Anmeldetag: 22.12.2006
(51) Int. Cl.: F01N 11/00, F02D 41/14, G01N 21/53

(54) **Verfahren sowie Vorrichtung zur Abgasuntersuchung bei Dieselmotoren**
Method and device for examining exhaust gases in diesel engines
Procédé et dispositif pour examiner des gaz d'échappement dans moteurs diesel

(30) Priorität: 29.12.2005 AT 89905 U
(43) Veröffentlichungstag der Anmeldung: 01.08.2007
(73) Patentinhaber: AVL DiTest GmbH, 8020 Graz (AT)
(72) Erfinder: Kohl, Anton, 8263, Großwilfersdorf (AT); Lackner, Gerald, 8010, Graz (AT); Simbürger, Karl, 8403, Lebring (AT)
(74) Vertreter: Patentanwälte Pinter & Weiss OG

(56) Entgegenhaltungen:
- WO-A-99/35480
- WO-A-02/070116
- WO-A-02/071030
- GB-A- 558 299
- GB-A- 2 148 487
- US-A- 6 148 656

## Beschreibung

Die Erfindung betrifft ein Verfahren zur Abgasuntersuchung bei Dieselmotoren während schneller Lastwechsel, umfassend die Bestimmung der Trübung bzw. der Absorption wobei die relative Veränderung des Abgasdurchflusses überwacht wird, sowie eine Vorrichtung zur Abgasuntersuchung bei Dieselmotoren, umfassend eine Trübungsmessapparatur und eine Auswerteeinheit.

Bei Dieselmotoren wird bei der Abgasuntersuchung die Trübung N bzw. die Absorption k überprüft. Vorrichtungen zur kontinuierlichen Bestimmung der Absorption bzw. der Trübung, welche die Strömungsgeschwindigkeit des Abgases und dessen Temperatur als Hilfsgröße heranziehen sind u.a. aus der US 6148656 A, der JP 2002214082 und der GB 2148487 A bekannt. Die beiden letztgenannten Dokumente sehen vor, die absolute Abgastemperatur zu messen, wobei entsprechend der GB 2148487 A diese nur zur Steuerung des Durchflusses eines Spülluftkanals vorsieht. In der US 6148656 A wird die Temperaturinformation als Korrekturfaktor für die Strömungsgeschwindigkeit herangezogen. In der JP 2004518869 ist ein Zusammenhang zwischen einer Drehzahländerung eines Verbrennungsmotors und der Strömungsgeschwindigkeit des Abgasstromes beschrieben.

In der GB 2148487 A ist geoffenbart, dass der Abgasstrom nahe am Verbrennungsmotor bei Temperaturen von 150°C bis 500°C untersucht wird. Im Gegensatz dazu ist es im Service- und Werkstättenbereich notwendig und vorteilhaft, eine Analyse des Abgases am Endrohr nach dem Abgasnachbehandlungssystem durchzuführen, wo von Fahrzeug zu Fahrzeug unterschiedlich ausgeführte Systeme und somit unterschiedliche Auslasstemperaturen auftreten, so dass ein allgemeingültiger Zusammenhang zwischen Abgastemperatur und Strömungsgeschwindigkeit nicht mehr hergestellt werden kann. Die Drehzahländerungen über die Messung der Abgastemperatur festzustellen hat den Nachteil, dass aufgrund von teilweise sehr komplexen und langen Auspuffanlagen, in denen thermische Ausgleichsprozesse stattfinden, am Auspuffendrohr meist keine Temperaturänderung festgestellt werden kann. Der in der GB 2148487 A geschilderte Zusammenhang zwischen der absolut gemessenen Abgastemperatur und der Strömungsgeschwindigkeit des Abgases ist für genaue Abgasanalysen unzulänglich. GB 2148487 A beschreibt den Oberbegriff der Ansprüche 1 und 3.

Bei einer vorschriftsgemäßen Abgasuntersuchung an einem dieselbetriebenem Fahrzeug sollen in jedem Fall schnelle Lastwechsel des Motors durchlaufen werden, welche durch rasche Drehzahlbeschleunigungen erreicht werden. Die Trübung N erreicht bei diesen Lastanstiegen ihren Maximalwert, welcher zur Ermittlung des Messergebnisses herangezogen wird. Die Überwachung des Lastwechsels wird in den meisten Fällen über die Drehzahl durchgeführt, wie in der GB 2148487 A, der WO 99/35480, der JP 2000161043 und der US 6148656 A geoffenbart. Dazu wird üblicherweise ein Drehzahlsensor im Motorraum angebracht, was in vielen Fällen sehr zeitintensiv und schwierig ist oder die Drehzahl elektronisch über eine Schnittstelle ausgelesen, was ebenfalls mit zusätzlichem Aufwand verbunden ist.

Daher wird die Drehzahl immer seltener als Führungs- und Überwachungsmessgröße für die Abgasuntersuchung herangezogen. Stattdessen wird die Trübung während des Hochlaufes beobachtet und neben der Auswertung des Trübungsspitzenwertes auch zur Prozedursteuerung verwendet. Dieses Verfahren hat den Nachteil, dass bei Fahrzeugen mit Partikelfilter, welche kaum Trübung produzieren, kein sicherer Drehzahlanstieg ermittelt werden kann, da auch im Drehzahlhochlauf kein wirklicher Trübungsspitzenwert auftritt.

Daher ist die Drehzahlerhöhung über andere Messgrößen festzustellen, wobei dafür keine zusätzlichen Sensoren am Fahrzeug appliziert werden sollten. In vielen Fällen wird der Abgasdruck überwacht, wofür ein Drucksensor ins Messgerät integriert wird. Der Abgasdruck wird über die Probennahme, die ohnehin am Auspuff angeschlossen wird, dem Drucksensor zugeführt. Es ist gebräuchlich und vielfach offengelegt, die Durchflussgeschwindigkeit mit Hilfe eines Differenzdrucksensors zu messen und optional mit Hilfe einer Temperaturinformation zu korrigieren. Hierzu wird, wie in der WO 02/070116 beschrieben ist, ein Differenzdrucksensor zusammen mit einem optionalen Temperatursensor und einer Recheneinheit verwendet, um auf die durchschnittliche Strömungsgeschwindigkeit schließen zu können. Ähnliche Systeme beschreiben die WO 99/35480 und die US 6148656 A. Derartige Sensoren messen hierbei die Druckdifferenz vor und hinter einer Verengung des Strömungsweges. Diese Verengung kann ein zusätzliches Element im Abgasmessgerät wie in der WO 99/35480 oder aber auch das gesamte Abgasnachbehandlungssystems des Fahrzeuges selbst sein, wie in der JP 2004518869, was den Aufbau noch aufwändiger gestaltet und einen zusätzlichen Eingriff am Fahrzeug erfordert. Die Differenzdruckmethode fordert jedenfalls nicht nur die Einbringung einer Verengung, sondern auch zwei direkte Anzapfungen des Gasstromes, die zum Differenzdrucksensor führen. Die Überprüfung des Abgasdrucks hat den Nachteil, dass die Russpartikel und die chemische Zusammensetzung des Abgases (NOx, HC, ...) sowie die chem. Verbindungen daraus (z.B.: Salpetersäure) den Sensor nachhaltig schädigen oder zerstören können. Weiters kann sich das im Abgas enthaltene Kondensat (oft mit Öl, Ruß, Rostteilchen,... versetzt) negativ auf den Drucksensor auswirken. Zudem besitzen Drucksensoren einen komplexen Aufbau, was sich in einem entsprechend hohen Preis niederschlägt.

Für die Durchflussmessung sind sehr aufwendige und komplizierte Anordnungen unterschiedlicher Ausprägungen und Konstruktionsformen bekannt, bei welchen beispielsweise ein beheizter Widerstand in Form eines Hitzedrahts oder eines Heißfilmplättchens vorhanden ist und eine komplexe Regelelektronik die Temperatur dieses vom Medium umströmten Hitzedrahtes oder Heißfilmplättchens konstant hält.

Die Aufgabe der vorliegenden Erfindung war eine Vorrichtung zur Abgasuntersuchung, die bei einfachem, funktionssicherem und wirtschaftlichem Aufbau und ohne große Eingriffe in den zu überprüfenden Motor die eindeutige Ermittlung von Drehzahländerungen bzw. Lastwechsel des Motors gewährleistet.

Zur Lösung dieser Aufgabe ist das Verfahren erfindungsgemäß dadurch gekennzeichnet, dass die relative Veränderung des Abgasdurchflusses überwacht wird. Dazu ist vorgesehen, dass das Abgas über einen beheizten Temperatursensor geleitet und dessen Temperaturänderung als Maß für die relative Veränderung des Durchflusses herangezogen und zur Ermittlung der schnellen Lastwechsel verwendet wird. Diese Durchflussänderung kann einfach und ohne aufwendige Eingriffe am Motor selbst im Bereich der Abgasprobennahme ermittelt werden und stellt durch Ermittlung des mit einer Drehzahländerung gekoppelten Gasstoßes eine einfache und sichere Überwachungsgröße dar.

Da für die Ermittlung des Gasstoßes die relative Temperaturänderung ausreichend ist, kann die für die Dauer des Gasstoßes erfolgende Abkühlung bzw. Erwärmung des Temperatursensors als Indikator für diesen Gasstoß und damit auch die Drehzahländerung herangezogen werden.

Vorteilhafterweise wird der eigentliche Prüflauf nach Einstellen einer Sensortemperatur eingeleitet, so dass ein Referenzwert bei einer bestimmten Drehzahl des Motors gegeben ist, gegenüber welcher die Abkühlung bzw. Erwärmung des Temperatursensors ermittelt wird. Vorzugsweise wird diese Referenzmarke bei Leerlaufdrehzahl ermittelt.

Die Lösung der gestellten Aufgabe wird aber auch durch eine Vorrichtung zur Abgasuntersuchung gelöst, die erfindungsgemäß gekennzeichnet ist durch eine Vorrichtung zur Ermittlung von relativen Durchflussänderungen des Abgases, gemäß Anspruch 3. Diese Vorrichtung bedarf keinerlei Änderungen am zu überprüfenden Motor und bietet dennoch eine Möglichkeit, sicher Drehzahländerungen des Motors feststellen zu können.

Die erfindungsgemäße Vorrichtung umfasst zur Ermittlung von relativen Durchflussänderungen einen beheizten Abgas-Temperatursensor. Für die Durchflussmessung sind sehr aufwendige und komplizierte Anordnungen bekannt, bei welchen eine beheizter Widerstand in Form eines Hitzedrahts oder eines Heißfilmplättchens vorhanden ist, und eine komplexe Regelelektronik die Temperatur dieses vom Messmediums umströmten Hitzedrahtes oder Heißfilmplättchens konstant hält. Aus der zur Stabilisierung der Temperatur notwendigen zugeführten Energie kann die vorbeiströmende Luftmasse ermittelt werden. Auch Anordnungen mit zwei Temperatursensoren sind zur Durchflussmessung bekannt, wobei einer der Sensoren die Temperatur des strömungsfreien Mediums ermittelt. Bei der erfindungsgemäßen Lösung hingegen wird der Abgas-Temperatursensor auf eine wählbare Betriebstemperatur aufgeheizt. Die Schaltung ist mit nur einem Temperatursensor sehr einfach aufgebaut.

Gemäß einem weiteren Merkmal der Erfindung ist dabei der Abgas-Temperatursensor in einer niederohmigen Messbrücke eingesetzt. Damit wird der Sensor durch den Strom in der Messbrücke automatisch beheizt. Aus der Messbrückendiagonalspannung kann die Sensortemperatur ermittelt werden, wobei Drehzahlerhöhungen und damit auch erhöhter Abgasstrom zur Abkühlung bzw. Erwärmung des Sensors und damit einem Anzeichen für einen Lastwechsel führen.

Vorteilhafterweise ist der Abgas-Temperatursensor mit einer Schutzhülle, vorzugsweise aus Glas, versehen, so dass die Messung nicht durch Ab- und Anlagerung von Russ, Schmutz und dgl. am Sensor beeinträchtigt wird.

Gemäß einer vorteilhaften Ausführungsform der Erfindung ist vorgesehen, dass der Abgas-Temperatursensor ein PT-100 Sensor ist. Diese Art von Sensor ist vielfach bewährt, sehr klein, und besitzt eine geringe Wärmekapazität und damit sehr gute dynamische Eigenschaften.

Gemäß einem weiteren Merkmal der Erfindung ist weiters vorgesehen, dass in der Auswerteeinheit ein Programm abgelegt ist, das den über die Trübungsmessapparatur ermittelten Verlauf der Abgas-Trübung als auch die Signale der Vorrichtung zur Ermittlung der relativen Veränderung des Abgasdurchflusses, vorzugsweise die Werte des Abgas-Temperatursensors, verarbeitet und daraus einen Lastwechsel ermittelt.

In der nachfolgenden Beschreibung soll die Erfindung anhand eines auch in den beigefügten Zeichnungen dargestellten Ausführungsbeispieles näher erläutert werden.

Dabei zeigt die Fig. 1 in schematischer Darstellung das Grundprinzip des erfindungsgemäßen Verfahrens, Fig. 2 zeigt ein Ausführungsbeispiel für eine erfindungsgemäße Messschaltung, und Fig. 3 ist ein Diagramm mit den zeitlichen Verläufen relevanter Größen und zugehöriger Signale bzw. Messwerte.

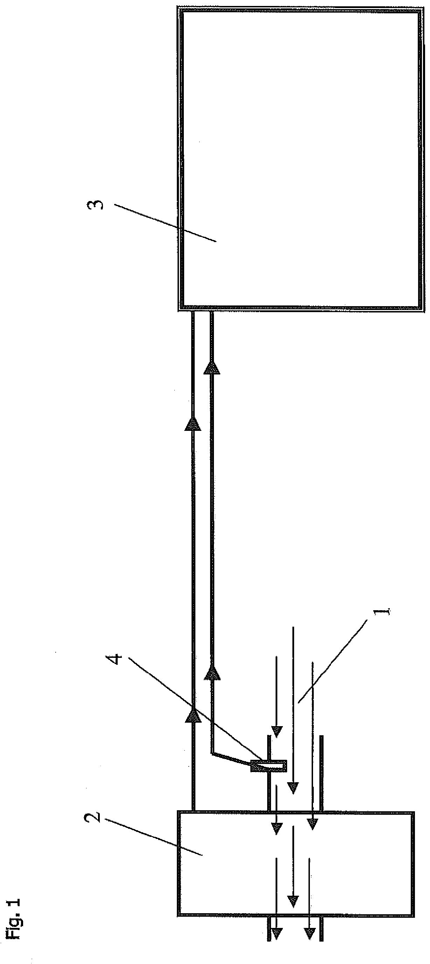

In einer erfindungsgemäßen Vorrichtung zur Abgasuntersuchung bei Dieselmotoren, wie auch in Fig. 1 beispielhaft und schematisch dargestellt, wird zumindest ein Teilstrom des zu analysierenden Abgases 1 durch eine Trübungsmessapparatur 2 geleitet. Diese Trübungsmessapparatur 2 ist mit einer Auswerteeinheit 3 verbunden, in welcher vorzugsweise ein Programm abgelegt ist, das den über die Trübungsmessapparatur 2 ermittelten Verlauf der Abgas-Trübung verarbeitet wird.

Um nun schnelle Lastwechsel sicher und durch eine einfache als auch leicht einsetzbare Anordnung zu erkennen, ist erfindungsgemäß zusätzlich eine Vorrichtung zur Ermittlung von relativen Veränderungen des Durchflusses des Abgases 1 vorhanden, welche im dargestellten Ausführungsbeispiel einen beheizten Abgas-Temperatursensor 4, vorzugsweise vor der Messzelle der Trübungsmessapparatur 2 geschaltet, umfasst. Auch dieser Abgas-Temperatursensor 4 ist mit der Auswerteeinheit 3 verbunden, in welcher vorzugsweise programmgesteuert die Signale der Vorrichtung zur Ermittlung von relativen Veränderungen des Abgasdurchflusses, vorzugsweise also die Werte des Abgas-Temperatursensors 4, verarbeitet und daraus die Lastwechsel ermittelt werden. Die Auswerteeinheit 3 kann auch in die Trübungsmessapparatur 2 integriert werden.

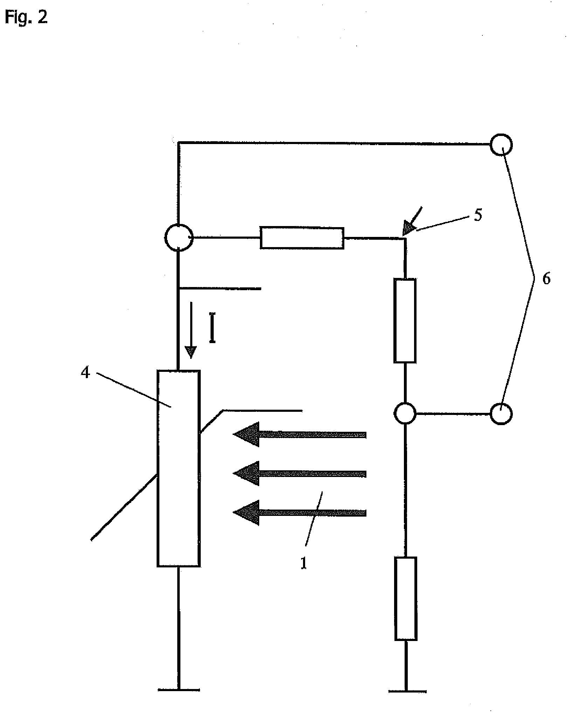

Vorzugsweise ist der Abgas-Temperatursensor 4 in einer niederohmigen Messbrücke eingesetzt, was beispielhaft in Fig. 2 dargestellt ist. Die drei Pfeile symbolisieren den Abgasstrom 1, welcher am Temperatursensor 4, vorzugsweise einem bewährten und billigen PT 100-Sensor, vorbeigeführt wird. Dieser ist vorteilhafterweise von einem schützenden Glasrohr umgeben, sodass Russpartikel, Öl, Kondensat u. dergleichen keinen Einfluss auf den Sensor 4 und damit auch nicht auf das Messergebnis haben. Bei 5 befindet sich die Einspeisung der Messbrücke, wobei aufgrund der niederohmigen Auslegung der Messbrücke der erforderliche Heizstrom durch den Temperatursensor 4 fließt. Bei 6 kann die Brückendiagonalspannung abgegriffen werden, welche von der Temperatur und dem damit veränderlichen Widerstand am Temperatursensor 4 abhängt. Diese Art der Messung besitzt überdies den Vorteil, dass kein schaltungstechnischer Mehraufwand erforderlich ist.

Bereits im Motorleerlauf strömt Abgas 1 am vorgeheizten Sensor 4 vorbei. Dies bewirkt eine geringfügige Abkühlung oder auch Erwärmung des Sensors 4 auf eine bestimmte Betriebstemperatur. Bei einem Drehzahlhochlauf im Zuge eines Lastwechsels strömt mehr Abgas 1 am Sensor 4 vorbei, sodass eine merkliche Abkühlung oder auch Erwärmung des Sensors 4 für die Dauer des Gasstoßes auftritt. Nach Rückkehr des Motors auf Leerlaufdrehzahl erhöht oder senkt sich die Sensortemperatur wieder.

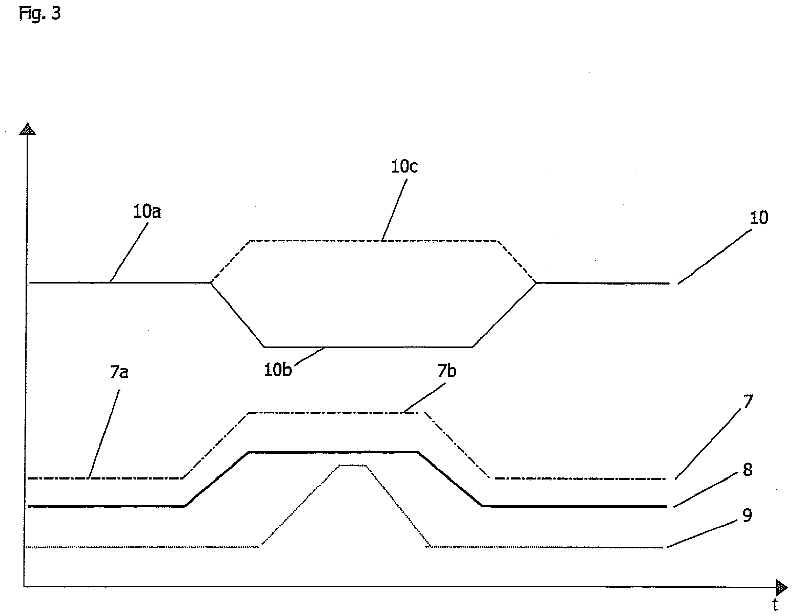

Die Fig. 3 stellt die oben beschriebenen Verhältnisse graphisch in einem Diagramm dar, welches den zeitlichen Verlauf der Drehzahl, des Abgasstroms, und der Trübung in den Kurven 7, 8 und 9 zeigt. Darüber ist die Kurve 10 für die Temperatur am Abgas-Temperatursensor 4 eingezeichnet.

Der Abschnitt 7a der Drehzahlkurve 7 repräsentiert die Ausgangsdrehzahl, meist die Leerlaufdrehzahl, bei welcher sich in Abhängigkeit von der in die Messbrücke beispielsweise der Fig. 2 eingespeisten Spannung eine bestimmte Betriebstemperatur, repräsentiert durch den Kurvenabschnitt 10a, am Temperatursensor 4 einstellt. Ein Lastwechsel erfolgt beispielsweise durch Erhöhen der Drehzahl, sodass der Kurvenabschnitt 7b erreicht wird. Die Abgasdurchflussänderung folgt der Drehzahländerung mit geringer zeitlicher Verzögerung, was in der Kurve 8 zum Ausdruck kommt. Mit nochmals geringer zeitlicher Verzögerung tritt dann eine Trübungsspitze auf, wie in Kurve 9 erkennbar ist.

Durch den Gasstoß und den damit erhöhten Abgasdurchfluss wird der Temperatursensor 4 abgekühlt, eventuell auch erwärmt, was in den Kurvenabschnitten 10b bzw. 10c zum Ausdruck kommt. Diese Abkühlung 10b bzw. Erwärmung 10c wird dann in der Auswerteeinheit 3 als Anzeichen für das Auftreten des Gasstoßes und damit eines Lastwechsels registriert und verarbeitet. Nach Zurückfahren auf die Ausgangsdrehzahl 7a geht auch die Temperatur wieder auf den Ausgangswert, also die Betriebstemperatur 10a zurück.

## Patentansprüche

1. Verfahren zur Abgasuntersuchung bei Dieselmotoren während schneller Lastwechsel, umfassend die Bestimmung der Trübung bzw. der Absorption, wobei die relative Veränderung des Abgasdurchflusses überwacht wird, **dadurch gekennzeichnet, dass** das Abgas über einen beheizten Temperatursensor geleitet und dessen Temperaturänderung als Maß für die relative Veränderung des Abgasdurchflusses herangezogen und zur Ermittlung der schnellen Lastwechsel verwendet wird.

2. Verfahren nach Anspruch 1, **dadurch gekennzeichnet, daß** der eigentliche Prüflauf nach Einstellen einer Sensortemperatur eingeleitet wird.

3. Vorrichtung zur Abgasuntersuchung bei Dieselmotoren während schneller Lastwechsel, umfassend eine Trübungsmessapparatur (2) und eine Auswerteeinheit (3), **gekennzeichnet durch** eine Vorrichtung zur Ermittlung von relativen Veränderungen des Abgasdurchflusses, die mit einem beheizten Abgas-Temperatursensor (4) und der Trübungsmessapparatur(2) verbunden ist, wobei die Auswerteeinheit (3) ausgestaltet ist, die schnellen Lastwechsel aus den Werten des Abgas-Temperatursensors (4) zu ermitteln und den von der Trübungsmessapparatur (2) ermittelten Verlauf der Abgas-Trübung während der schnellen Lastwechsel zu verarbeiten.

4. Vorrichtung nach Anspruch 3, **dadurch gekennzeichnet, daß** der Abgas-Temperatursensor (4) in einer niederohmigen Messbrücke eingesetzt ist.

5. Vorrichtung nach Anspruch 3 oder 4, **dadurch gekennzeichnet, daß** der Abgas-Temperatursensor (4) mit einer Schutzhülle, vorzugsweise aus Glas, versehen ist.

6. Vorrichtung nach einem der Ansprüche 3 bis 5, **dadurch gekennzeichnet, daß** der Abgas-Temperatursensor (4) ein PT-100 Sensor ist.

## Claims

1. Method for exhaust gas examination with Diesel engines during rapid load changes, comprising the determination of the turbidity and/or absorption, wherein the relative change in the exhaust gas flow is monitored, **characterised in that** the exhaust gas is conducted over a heated temperature sensor, and the temperature change of which is drawn on as a measure for the relative change in the exhaust gas throughflow in order to determine the rapid load changes.

2. Method according to Claim 1, **characterised in that** the actual course of the examination is initiated after the setting of a sensor temperature.

3. Device for exhaust gas examination with Diesel engines during rapid load changes, comprising a turbidity measuring apparatus (2) and an evaluation unit (3), **characterised by** a device for the determination of relative changes in the exhaust gas throughflow which is connected to a heated exhaust gas temperature sensor (4) and the turbidity measuring apparatus (2), wherein the evaluation unit (3) is embellished to determine the rapid load changes from the values of the exhaust gas temperature sensor (4) and to process the course of the exhaust gas turbidity during rapid load changes.

4. Device according to Claim 3, **characterised in that** the exhaust gas temperature sensor (4) is a low-resistance measuring bridge.

5. Device according to Claim 3 or 4, **characterised in that** the exhaust gas temperature sensor (4) is provided with a protective sleeve, for preference made of glass.

6. Device according to one of Claims 3 to 5, **characterised in that** the exhaust gas temperature sensor (4) is a PT-100 sensor.

## Revendications

1. Procédé d'analyse de gaz d'échappement dans les moteurs diesel lors de changements rapides de charge, le procédé comprenant la détermination de la turbidité ou de l'absorption, la variation relative du débit de gaz d'échappement étant surveillée, **caractérisé en ce que** les gaz d'échappement sont guidés à travers un capteur de température chauffé et leur variation de température est utilisé comme mesure de la variation relative du débit de gaz d'échappement et utilisé pour déterminer les changements rapides de charge.

2. Procédé selon la revendication 1, **caractérisé en ce que** le test proprement dit est lancé après réglage de la température du capteur.

3. Dispositif d'analyse de gaz d'échappement dans les moteurs diesel lors de changements rapides de charge, le dispositif comprenant un appareil de mesure de turbidité (2) et une unité d'évaluation (3), **caractérisé par** un dispositif de détermination de variations relatives du débit de gaz d'échappement, qui est relié à un capteur de température de gaz d'échappement chauffé (4) et à l'appareil de mesure de turbidité (2), l'unité d'évaluation (3) étant conçue pour déterminer les changements rapides de charge à partir des valeurs du capteur de température de gaz d'échappement (4) et pour traiter l'allure, déterminée par l'appareil de mesure de turbidité (2), de la turbidité de gaz d'échappement pendant les changements rapides de charge.

4. Dispositif selon la revendication 3, **caractérisé en ce que** le capteur de température de gaz d'échappement (4) est utilisé dans un pont à basse impédance.

5. Dispositif selon la revendication 3 ou 4, **caractérisé en ce que** le capteur de température de gaz d'échappement (4) est pourvu d'un capot de protection, de préférence en verre.

6. Dispositif selon l'une des revendications 3 à 5, **caractérisé en ce que** le capteur de température de gaz d'échappement (4) est un capteur PT-100.
